# DEMANDE DE BREVET EUROPEEN

(11) **EP 0 990 821 A1**
(43) Date de publication de la demande: **05.04.2000**
(21) Numéro de dépôt: 99402403.2
(22) Date de dépôt: 01.10.1999
(51) Int. Cl.: F16H 59/04, G01D 5/14

(54) **Transmission comportant un capteur à effet hall**

(30) Priorité: 02.10.1998 FR 9812351
(71) Demandeur: RENAULT, 92109 Boulogne-Billancourt (FR)
(72) Inventeur: Pouyau, Laurent, 92290 Chatenay Malabry (FR); Rivoiron, Sylvain, 95320 Saint-Leu-La-Foret (FR)

(57) **Abrégé**

Transmission de véhicule automobile, du type qui comporte une boîte de vitesses, dont au moins un arbre de sortie est solidaire de roues du véhicule et dont au moins un arbre d'entrée est susceptible d'être lié à un moteur du véhicule par l'intermédiaire d'un embrayage, du type qui comporte un levier de commande (10) qu'un conducteur est susceptible d'actionner pour permettre la sélection et le passage de différents rapports de démultiplication de la boîte de vitesses, le levier de commande (10) comportant des moyens électriques de détection de l'actionnement du levier (10), associés à un module électronique, pour commander au moins l'embrayage du véhicule,
caractérisée en ce que les moyens électriques de détection de l'actionnement du levier de commande (10) comportent au moins un capteur (36) à effet Hall.

## Description

L'invention concerne une transmission de véhicule automobile.

L'invention concerne plus particulièrement une transmission de véhicule automobile, du type qui comporte une boîte de vitesses dont au moins un arbre de sortie est solidaire de roues du véhicule et dont au moins un arbre d'entrée est susceptible d'être lié à un moteur du véhicule par l'intermédiaire d'un embrayage, du type qui comporte un levier de commande qu'un conducteur est susceptible d'actionner pour permettre la sélection et le passage de différents rapports de démultiplication de la boîte de vitesses, le levier de commande comportant des moyens électriques de détection de l'actionnement du levier qui sont associés à un module électronique pour commander au moins l'embrayage du véhicule,

On connaît de nombreux exemples de transmissions comportant des moyens électriques de détection de la position du levier du commande.

Le document US-A-5.660.079 décrit et représente une transmission de véhicule automobile comportant un levier de commande à l'extrémité supérieure duquel est agencé un pommeau dans lequel sont agencés des contacteurs mécaniques permettant la détection du déplacement du levier. L'ouverture ou la fermeture de contacteurs permet de commander un embrayage du véhicule, la sélection et le passage des rapports de démultiplication de la boîte de vitesses étant obtenus de manière conventionnelle par l'intermédiaire d'une tringlerie qui relie le levier de commande à la boîte de vitesses.

Une telle transmission présente plusieurs inconvénients.

En premier lieu, le positionnement des contacteurs dans le pommeau du levier de commande est peu judicieuse. En effet, le levier de commande d'une boîte de vitesses mécanique est naturellement soumis à des vibrations qui sont transmises du moteur et de la boîte au levier par l'intermédiaire de la tringlerie. De plus, le pommeau est l'élément du levier de commande qui est le plus susceptible d'être soumis à des vibrations, celles-ci étant d'autant plus amplifiées que la longueur de la tige du levier de commande est grande.

La position des contacteurs dans le pommeau du levier de commande risque par conséquent de conduire à leur ouverture ou à leur fermeture inopinées lorsque le levier est soumis à d'importantes vibrations, par exemple lorsque le véhicule roule sur un terrain accidenté, ou encore dans le cas ou le conducteur garde la main sur le pommeau du levier pendant qu'il conduit.

En second lieu, l'utilisation de contacteurs mécaniques est elle-même sujette à des risques de dysfonctionnement. En effet, les contacteurs peuvent être soumis à l'oxydation, ou peuvent être amenés à se détériorer sous l'influence des vibrations. A terme, il peut se produire des faux contacts dans les contacteurs, conduisant à des commandes intempestives de l'embrayage.

Pour remédier à ces inconvénients, l'invention propose une transmission de véhicule automobile comportant un levier sans contacteurs mécaniques.

Dans ce but, l'invention propose une transmission du type précédemment décrit, caractérisée en ce que les moyens électriques de détection de l'actionnement du levier de commande comportent au moins un capteur à effet Hall.

Selon d'autres caractéristiques de l'invention :
- le levier de commande est mobile entre au moins deux positions, qui sont associées à au moins deux échelons de tension du capteur à effet Hall, pour commander le module électronique suivant au moins deux configurations de fonctionnement de la transmission ;
- le levier de commande est formé d'une tige longitudinale qui est reçue dans un fourreau tubulaire lié à une embase et la tige comporte successivement :
   - une première extrémité portant un pommeau destiné à être actionné par le conducteur,
   - une partie intermédiaire, qui est rappelée élastiquement dans une position intermédiaire neutre, qui est reçue avec jeu dans le fourreau longitudinal tubulaire et qui est articulée par rapport au fourreau pour pivoter autour d'un axe transversal entre au moins la position intermédiaire neutre dans laquelle la tige est coaxiale au fourreau et au moins une position extrême dans laquelle la tige pivote dans le fourreau autour de son axe d'articulation, et
   une deuxième extrémité portant un doigt du capteur à effet Hall ;
- l'embase du levier de commande comporte une bobine du capteur à effet Hall qui est agencée dans le prolongement de la position intermédiaire neutre, en regard du doigt ;
- le doigt du capteur à effet Hall est étagé et il comporte trois crans de longueur croissante qui s'étendent longitudinalement pour définir en regard de la bobine, lorsque la tige pivote autour de son axe dans le fourreau, trois entrefers décroissants associés à deux positions extrêmes et à la position intermédiaire neutre de la tige ;
- les entrefers décroissants sont associés à des échelons croissants de tension délivrés par le capteur à effet Hall au module électronique ;
- la boîte de vitesses est une boîte de vitesses comportant des actionneurs électromagnétiques commandés par le module électronique, l'échelon intermédiaire de tension étant converti par le module électronique en une instruction de maintien du rapport courant, l'embrayage étant embrayé, et les échelons extrêmes de tension étant convertis par le module électronique en une instruction de débrayage, puis en une instruction successive de passage d'un rapport consécutif, puis en une instruction d'embrayage ;
- le fourreau est articulé sur l'embase par une rotule et il est lié à une tringlerie de la boîte de vitesses commandant le passage des rapports de démultiplication ;
- la boîte de vitesses est une boîte de vitesses mécanique, l'échelon intermédiaire de tension étant converti par le module électronique en une instruction de maintien de l'embrayage embrayé, et les échelons extrêmes de tension étant convertis par le module électronique en une instruction de débrayage ; et
- la tige est articulée par rapport au fourreau par l'intermédiaire d'une rotule, et la tige est rappelée élastiquement dans la position intermédiaire neutre par l'intermédiaire d'une bague en matériau élastomère qui est interposée coaxialement entre la tige et le fourreau.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe longitudinale d'un levier de commande conforme à l'invention représenté dans une position extrême tirée ;
- la figure 2 est une vue selon la figure 1 représentant le levier en position intermédiaire neutre ;
- la figure 3 est une vue selon la figure 1 représentant le levier en position extrême poussée ;
- la figure 4 est un schéma des échelons de tension associés aux différents entrefers définis par le capteur à effet Hall ;

Dans la description qui va suivre, des chiffres de référence identiques désignent des pièces identiques ou ayant des fonctions similaires.

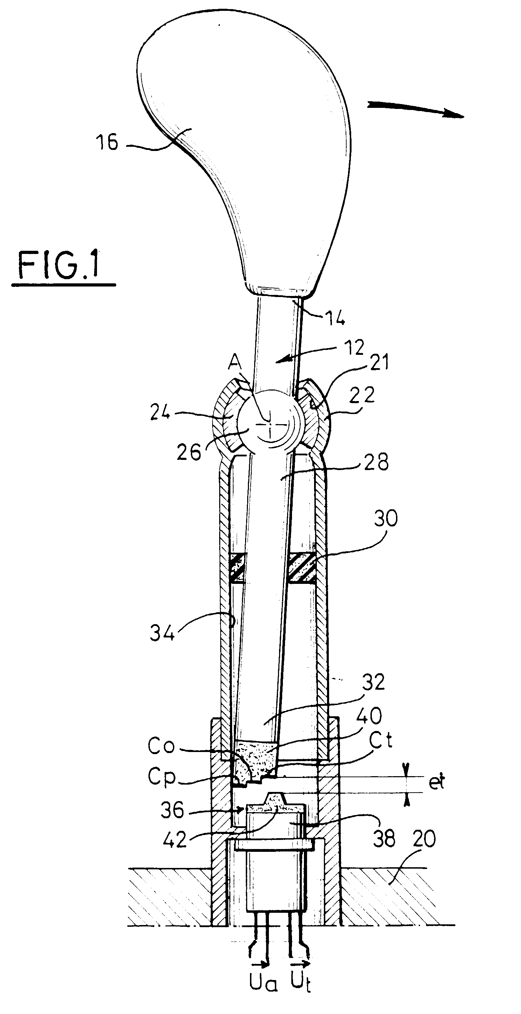

On voit sur la figure 1 un levier de commande 10 pour la sélection et le passage des différents rapports de démultiplication d'une transmission conforme à l'invention. De manière connue, le levier de commande 10 comporte une tige 12 sensiblement longitudinale et cylindrique à une première extrémité 14 de laquelle est agencé un pommeau 16 destiné à être actionné par le conducteur pour permettre la sélection et le passage des différents rapports de démultiplication de la transmission.

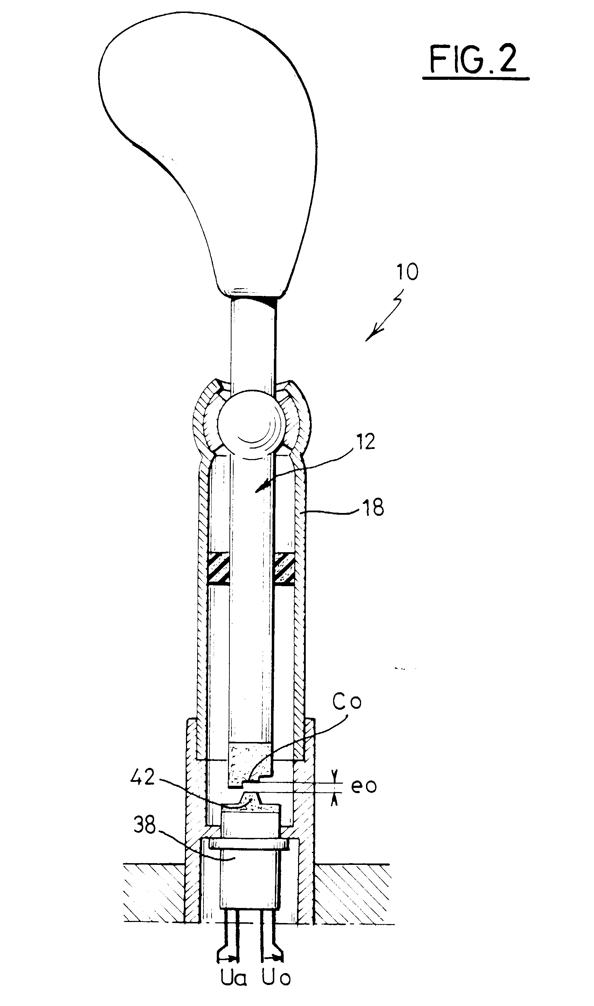

Conformément à l'invention, la tige longitudinale 12 est reçue sensiblement coaxialemennt dans un fourreau tubulaire 18 qui est lui-même, comme l'illustrent les figures 1 et 2, solidaire d'une embase 20 liée de façon rigide au véhicule. Le fourreau 18 est d'un diamètre supérieur au diamètre de la tige longitudinale 12 et il comporte à une première extrémité 22, tournée vers le pommeau 16, un logement 21 de forme sensiblement sphérique qui est destiné à recevoir, par l'intermédiaire de patins 24 en matériau à faible coefficient de frottement, une portée sphérique convexe 26 appartenant à un tronçon intermédiaire 28 de la tige longitudinale 12. De la sorte, la tige longitudinale 12 est articulée en rotation par rapport au fourreau 18 autour d'un axe A sensiblement transversal. Cette disposition n'est pas limitative de l'invention et la tige 12 peut, à titre de variante, être articulée dans le fourreau 18 par tout autre moyen susceptible de réaliser une liaison pivot entre la tige 12 et le fourreau 18.

La tige 12 est ainsi capable de débattements dans le fourreau 18, ces débattements étant limités par le contact de la tige 12 avec la paroi intérieure 34 du fourreau 18.

Le tronçon intermédiaire 28 de la tige longitudinale 12 traverse une bague 30 en matériau élastomère qui est coaxiale au fourreau 18 et qui est interposée entre le fourreau 18 et la tige longitudinale 12, de sorte que la tige longitudinale 12 est rappelée élastiquement dans ses débattements par rapport au fourreau 18 dans une position intermédiaire "neutre" ou de repos, dans laquelle elle est coaxiale avec le fourreau 18. La tige longitudinale 12 est ainsi susceptible d'occuper des positions extrêmes opposées autour de sa position intermédiaire neutre qui sont délimitées par le contact avec la paroi 34.

Conformément à l'invention, un capteur à effet Hall 36 est agencé à une deuxième extrémité 36 du fourreau 18, tournée vers l'embase 20.

Le capteur à effet Hall 36 comporte une bobine 38 cylindrique qui est coaxiale au fourreau 18 et est liée à celui-ci de manière rigide, et il comporte un doigt 40 qui est agencé à la deuxième extrémité 32 de la tige 12. La bobine 38 comporte un téton 42 qui fait saillie axialement hors des spires (non représentées)de la bobine 38 en direction du levier 12.

Le doigt 40 de la tige 12 est étagé et comporte trois crans Cₜ, C₀ et Cₚ de longueurs croissantes qui sont susceptibles de définir trois entrefers associés en rapport avec leur position en regard du téton de la bobine 38.

Comme on peut le voir sur la figure 2, dans la position intermédiaire neutre de la tige 12, le cran C₀ de longueur intermédiaire est en regard du téton 42 de la bobine 38 et il définit un entrefer intermédiaire e₀.

Lorsque le levier 12 est tiré dans le sens de la flèche de la figure 1, le cran Cₜ de petite longueur est amené en regard du téton 42 et il définit alors un entrefer eₜ de grande longueur axiale.

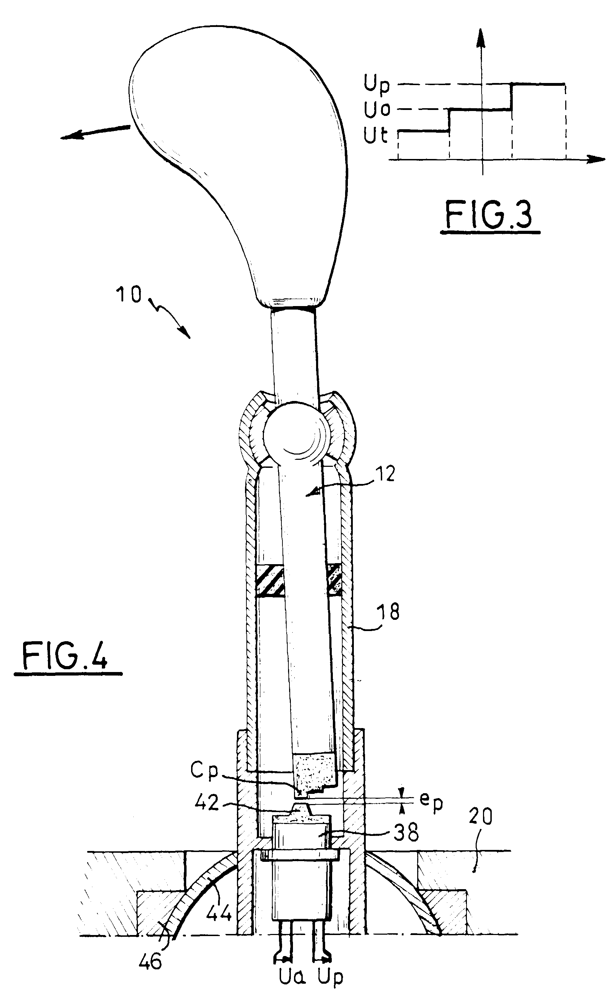

Enfin, lorsque le levier 12 est poussé dans le sens de la flèche de la figure 3, le cran Cₚ de grande longueur est amené en regard du téton 42 de la bobine 38 et définit une entrefer eₚ de petite longueur axiale.

Comme l'indiquent les figures 1 à 3, la bobine 38 est alimentée sous une tension continue Uₐ, par exemple la tension d'alimentation des instruments de bord du véhicule. Le changement de position des crans C₀, Cₚ, et Cₜ en regard du téton de la bobine 38 induit une variation de la tension de sortie de la bobine 38 qui prend des valeurs associées à chaque entrefer e₀, eₚ, et eₜ.

Ainsi, comme l'illustre la figure 1, lorsque le cran Cₜ est en regard du téton 42, la bobine 38 délivre un échelon de tension Uₜ associé à l'entrefer eₜ.

Comme l'illustre la figure 2, lorsque la tige 12 est dans sa position intermédiaire neutre et que le cran C₀ est en regard du téton 42, la bobine 38 délivre un échelon de tension U₀ associé à l'entrefer e₀.

Enfin, comme l'illustre la figure 3, lorsque le cran Cₚ est en regard du téton 42, la bobine 38 délivre un échelon de tension Up associé à l'entrefer eₚ.

Comme l'illustre la figure 4, les échelons de tension Uₜ, U₀ et Uₚ associés à chacune des positions du levier 12 sont inversement proportionnels à l'épaisseur de l'entrefer eₜ, e₀, et eₚ associés. Ainsi, le plus grand entrefer eₜ correspond au plus petit échelon de tension Uₜ, l'entrefer e₀ correspond au plus petit échelon de tension U₀, et le plus petit entrefer eₚ correspond au plus grand échelon de tension Uₚ.

Un module électronique de commande (non représenté) est susceptible de commander le fonctionnement de la transmission du véhicule en fonction de la valeur de la tension de sortie de la bobine 38.

Les figures 1 et 2 illustrent plus particulièrement un premier mode de réalisation de l'invention dans lequel, la boîte de vitesses associée au levier 10 est une boîte dite "robotisée" dont les organes sont mus par des actionneurs électromagnétiques (non représentés) et pour laquelle le levier de commande 10 est utilisé en commande séquentielle. Ainsi, la boîte de vitesses étant placée dans un rapport de démultiplication déterminé, l'échelon de tension U₀ est converti par le module électronique en une instruction de maintien du rapport considéré de la boîte de vitesses et l'embrayage est maintenu embrayé.

De même, l'échelon de tension Uₚ correspondant à la position poussée du levier de commande 10 représenté à la figure 1 est converti par le module électronique en une instruction de débrayage, puis en une instruction successive de passage du rapport supérieur. L'embrayage est embrayé quand le conducteur relâche le levier 10 vers sa position intermédiaire neutre.

Enfin, l'échelon de tension Uₜ, associé à la position tirée du levier de commande 10, est converti par le module électronique en une instruction de débrayage, puis en une instruction successive de passage du rapport de démultiplication inférieur L'embrayage est embrayé quand le conducteur relâche le levier 10 vers sa position intermédiaire neutre.

Ainsi, le levier de commande 10 est susceptible d'opérer une commande séquentielle simple des rapports de la boîte de vitesses en poussant le levier 10 pour monter les rapports ou en le tirant pour descendre les rapports.

Cette configuration n'est nullement restrictive de l'invention, et les rapports de la boîte de vitesses peuvent être montés en tirant le levier 10, et descendus en le poussant.

La figure 3 représente un mode de réalisation en variante de l'invention dans lequel la boîte de vitesses est une boîte de vitesses à commande mécanique, le levier de commande 10 ne commandant alors électriquement que l'embrayage associé à la boîte de vitesses. Dans cette configuration, le fourreau 18 n'est plus lié rigidement à l'embase 20 solidaire du véhicule mais il est articulé par rapport à celui-ci par l'intermédiaire d'une rotule 44 qui est solidaire de sa deuxième extrémité 36 et qui est reçue dans l'embase 20 par l'intermédiaire de patins 46 en matériau à faible coefficient de frottement. Une partie d'accrochage (non représentée) du fourreau 18 est liée à une tringlerie conventionnelle d'actionnement mécanique de la boîte de vitesses.

De la sorte, lorsque l'utilisateur actionne le levier 10 de commande, les déplacements de la tige 12 à l'intérieur du fourreau 18 ne commandent que le fonctionnement de l'embrayage. Ainsi, l'échelon intermédiaire de tension U₀ est converti par le module électronique en une instruction de maintien de l'embrayage embrayé et les tensions extrêmes Uₜ et Up sont converties par le module électronique en une instruction de débrayage qui, accompagnant le mouvement du fourreau 18, permet d'engager le rapport sélectionné. Lorsque l'utilisateur relâche le levier 10, la tige 12 est rappelée élastiquement dans sa position intermédiaire neutre, ce qui provoque l'apparition de l'échelon de tension U₀ en sortie de la bobine 38 et provoque l'embrayage de sorte que le rapport de démultiplication choisi permet la transmission du mouvement de rotation du moteur aux roues du véhicule.

Avantageusement, le levier de commande 10 permet de réaliser une commande électrique de l'embrayage et éventuellement de la boîte de vitesses en s'affranchissant des risques de dysfonctionnements liés à des contacts électriques conventionnels.

## Revendications

1. Transmission de véhicule automobile, du type qui comporte une boîte de vitesses dont au moins un arbre de sortie est solidaire de roues du véhicule et dont au moins un arbre d'entrée est susceptible d'être lié à un moteur du véhicule par l'intermédiaire d'un embrayage, du type qui comporte un levier de commande (10) qu'un conducteur est susceptible d'actionner pour permettre la sélection et le passage de différents rapports de démultiplication de la boîte de vitesses, le levier de commande (10) comportant des moyens électriques de détection de l'actionnement du levier du type capteur à effet Hall (10) qui sont associés à un module électronique pour commander au moins l'embrayage du véhicule, caractérisée en ce que le doigt (40) du capteur à effet Hall est étagé et il comporte trois crans (Cₚ, C₀, Cₜ) de longueur croissante qui s'étendent longitudinalement pour définir en regard de la bobine (38), lorsque la tige (12) pivote autour de son axe dans le fourreau (18), trois entrefers décroissants (eₚ, e₀, eₜ) associés à deux positions extrêmes et à la position intermédiaire neutre de la tige (12).

2. Transmission selon la revendication 1, caractérisée en que le levier de commande (10) est mobile entre au moins deux positions, qui sont associées à au moins deux échelons de tension du capteur (36) à effet Hall, pour commander le module électronique suivant au moins deux configurations de fonctionnement de la transmission.

3. Transmission selon la revendication 2, caractérisée en ce que le levier de commande (10) est formé d'une tige longitudinale (12) qui est reçue dans un fourreau (18) tubulaire lié à une embase (20) et en ce que la tige (12) comporte successivement:
- une première extrémité (14) portant un pommeau (16) destiné à être actionné par le conducteur ;
- une partie intermédiaire (28), qui est rappelée élastiquement dans une position intermédiaire neutre, qui est reçue avec jeu dans le fourreau (18) longitudinal tubulaire et qui est articulée par rapport au fourreau (18) pour pivoter autour d'un axe transversal entre au moins la position intermédiaire neutre dans laquelle la tige (12) est coaxiale au fourreau (18) et au moins une position extrême dans laquelle la tige pivote dans le fourreau (18) autour de son axe d'articulation, et
une deuxième extrémité (32) portant un doigt (40) du capteur (36) à effet Hall.

4. Transmission selon la revendication 3, caractérisée en ce que l'embase du levier de commande (20) comporte une bobine (38) du capteur (36) à effet Hall qui est agencée dans le prolongement de la position intermédiaire neutre, en regard du doigt.

5. Transmission selon l'une des revendications précédentes, caractérisé en ce que les entrefers (eₚ, e₀, eₜ) sont associés à des échelons croissants de tension (Uₚ, U₀, Uₜ) délivrés par le capteur (38) à effet Hall au module électronique.

6. Transmission selon la revendication 5, caractérisé en ce que la boîte de vitesses est une boîte de vitesses comportant des actionneurs électromagnétiques commandés par le module électronique,
l'échelon intermédiaire de tension (U₀) étant converti par le module électronique en une instruction de maintien du rapport courant, l'embrayage étant embrayé,
les échelons extrêmes de tension (Uₚ, Uₜ) étant convertis par le module électronique en une instruction de débrayage, puis en une instruction successive de passage d'un rapport consécutif, puis en une instruction d'embrayage.

7. Transmission selon l'une quelconque des revendications 3 à 6, caractérisée en ce que le fourreau (18) est articulé sur l'embase (20) par une rotule (44, 46) et en ce qu'il est lié à une tringlerie de la boîte de vitesses commandant le passage des rapports de démultiplication.

8. Transmission selon la revendication 7 prise en combinaison avec la revendication 5, caractérisée en ce que la boîte de vitesses est une boîte de vitesses mécanique. l'échelon intermédiaire de tension (U₀) étant converti par le module électronique en une instruction de maintien de l'embrayage embrayé, et les échelons extrêmes de tension (Uₚ, Uₜ) étant convertis par le module électronique en une instruction de débrayage.

9. Transmission selon l'une quelconque des revendications 3 à 8, caractérisée en ce que la tige (12) est articulée par rapport au fourreau par l'intermédiaire d'une rotule (24, 26) et en ce qu'elle est rappelée élastiquement dans la position intermédiaire neutre par l'intermédiaire d'une bague (30) en matériau élastomère qui est interposée coaxialement entre la tige (12) et le fourreau (18).
